# EUROPEAN PATENT APPLICATION

(11) **EP 1 580 146 A1**
(43) Date of publication of application: **28.09.2005**
(21) Application number: 04425202.1
(22) Date of filing: 23.03.2004
(51) Int. Cl.: B65D 85/36, B65D 85/60, A21B 3/13, A47G 19/03

(54) **Cakes and/or sweets support, manufacturing method thereof, and use of the support for flaming and for carrying cakes and/or sweets**

(71) Applicant: NOVACART S.P.A., 23846 Garbagnate Monastero (Lecco) (IT)
(72) Inventor: Anghileri, Gianmario, 23864 Malgrate (Lecco) (IT)
(74) Representative: Ponzellini, Gianmarco

(57) **Abstract**

It is disclosed a support (1) for cakes and/or sweets (1a), a method of manufacturing said support (1) and use of the support (1) itself to carry and flame cakes and/or sweets. The support (1) consists of a flat main body (2) substantially made of paper material and extending in a respective horizontal plane. The support further has an outer wall (3) directly emerging from the main body (2) and extending along the whole perimetral extension of the main body (2). The outer wall (3) is inclined under said horizontal plane and has an end rim (4) disposed under the horizontal plane and substantially turned downwardly.

## Description

The present invention relates to a support for cakes and/or sweets, a method of manufacturing said support and use of the support for flaming and carrying cakes and/or sweets.

In particular, the present invention is advantageously used for packaging and carrying cakes and supporting the same while they are submitted to finishing processes such as flaming.

It is known that cakes and sweets of similar sizes are generally packaged and carried on a flat support of a substantially circular conformation or in any case of a shape corresponding to that of the sweet or the cake.

The support is made of a stiff paper material (usually cardboard) and is preferably coated with a plastic film for food use, advantageously consisting of polyethylene, which is applied to the upper surface of the support designed to bear the cake.

The plastic film has a dual function, i.e. to protect the support in order to avoid the same becoming moist or wet, which will damage it, and to protect the sweet from contact with the paper material.

In addition, the plastic film that can be of any colour or can have particular drawings thereon, also has the function of giving the support and therefore the whole package, a more agreeable and appreciable aesthetic aspect above all during consumption of the confectionery product.

While known supports are functional for transport and support of the cake or the sweet, they however have important drawbacks.

Said drawbacks are strictly connected with the presence of an end rim of the support which extends along the whole periphery of the support itself. In fact, the end rim has a side surface perpendicular to the horizontal planar extension of the support; this surface is not covered with the plastic film and is in sight, so that the aspect of the support as a whole is not very agreeable.

In addition, the end rim may have possible irregularities consisting of projecting fibres that further worsen the aesthetic aspect of the whole package. These irregularities of the end rim are due to the nature of the paper material tending to break. Furthermore, the support is obtained through a cutting or punching operation carried out on a sheet of paper material so as to define the end rim and therefore the peripheral extension of the support. As well known, these operations do not always allow a net cutting of the fibres constituting the paper sheet, but give rise to frayed fibres emerging from the side surface of the end rim.

A further important drawback resides in that given types of cakes are submitted to a flaming process that can damage the above described support. In particular, the flaming process consists of the passage of a blazing flame over the cake just before packaging of the cake itself, for the purpose of coating the outer surface of the cake with melted sugar and thus give the cake a particular decorative aspect. Consequently, passage of the flame along the side portion of the cake/sweet also acts on the end rim of the support and in particular on the side surface of the rim, which remains uncovered and runs the risk of being burnt.

For this reason, the support is damaged at the end rim and the cellulose fibres forming the support are burnt or blackened, above all if, as above said, they jut out of the side surface of the rim.

Consequently, should attention be paid for the purpose of not damaging the support rim during passage with the flame, the aesthetic aspect of same would be worsened due to the presence of regions/portions in sight damaged and burnt.

Also known are supports for cakes/sweets having the end rim inclined downwardly and such shaped as to dispose the respective side surface outwardly. In this manner, the end rim defines a perimetral rest element of the support, and a peripheral concave portion for housing a possible closing cover to be associated with the support.

These supports are made of a metal or plastic material and are suitably shaped by means of a moulding process.

Obviously, in the metal or plastic supports the above mentioned technical problem connected with the flaming operations is not present. In fact, due to the resistance to heat of the plastic or metal material, the end rim is not at all damaged or blackened by passage of the flame.

However, these types of support have an important drawback due to the high costs of the material of which they are made. In fact, the metal or plastic material and the relevant manufacturing operations have a production cost much higher than the production costs of the paper material, so that actually these supports cannot be used for the specified purposes.

Finally, a further drawback of the supports of metal material is the excessive weight of the whole package for cakes and/or sweets. This drawback too depends on the nature of the metal material that is obviously heavier than cardboard.

Accordingly, the present invention aims at proposing a support for cakes and/or sweets solving the above mentioned drawbacks.

In particular, it is an aim of the present invention to make available a support for cakes and/or sweets maintaining an agreeable aesthetic aspect during the operations for making a cake and/or a sweet.

More particularly, it is an aim of the present invention to make available a support for cakes and/or sweets preventing any damage due to the flaming operations carried out on the cake and/or the sweet while resting on the support itself.

It is a further aim of the present invention to make available a support for cakes and/or sweets of reduced costs as compared with those of the paperboard disks that are currently utilised at present.

Further features and advantages will become more apparent from the detailed description of a preferred but not exclusive embodiment of a support for cakes and/or sweets, of a method of manufacturing the support and the use of such a support for flaming and carrying cakes and/or sweets, in accordance with the present invention. This description will be set out hereinafter with reference to the accompanying figures, given by way of non-limiting example, in which:
- Fig. 1 is a perspective view of the support for cakes and/or sweets in accordance with the present invention;
- Fig. 2 is an elevation side view and in section of the support in Fig. 1;
- Fig. 3 shows a second embodiment of the support illustrated in Fig. 2;
- Fig. 4 is an enlarged view of a detail seen in Fig. 2.

With reference to the drawings, a support for sweets and/or cakes has been generally identified by reference numeral 1.

For the sake of clarity it is to be pointed out that in the following of the present specification reference will be exclusively made to a support 1 for cakes 1a, when the cake 1a has a substantially cylindrical conformation. However, the present invention advantageously also applies to any confectionery product of geometrical sizes similar to those of a cake. For this reason, while in the specification and in the figures reference will be exclusively made to a substantially circular support (arranged to carry the cylindrical cake 1a), it can have any shape based on the sweet/cake to be carried, e.g. a square or rectangular shape.

The support 1 consists of a flat main body 2 substantially made of paper material and extending in a respective horizontal plane. Support 1 further has an outer wall 3 directly emerging from the main body 2 and extending along the whole perimetral extension of the main body 2 itself. In particular the outer wall 3, of paper material as well, is of one piece construction with the main body 2 and has an end rim 4.

As above said, the main body 2, outer wall 3 and end rim 4 have a circular extension and a size corresponding to that of the cake 1a designed to be carried by support 1.

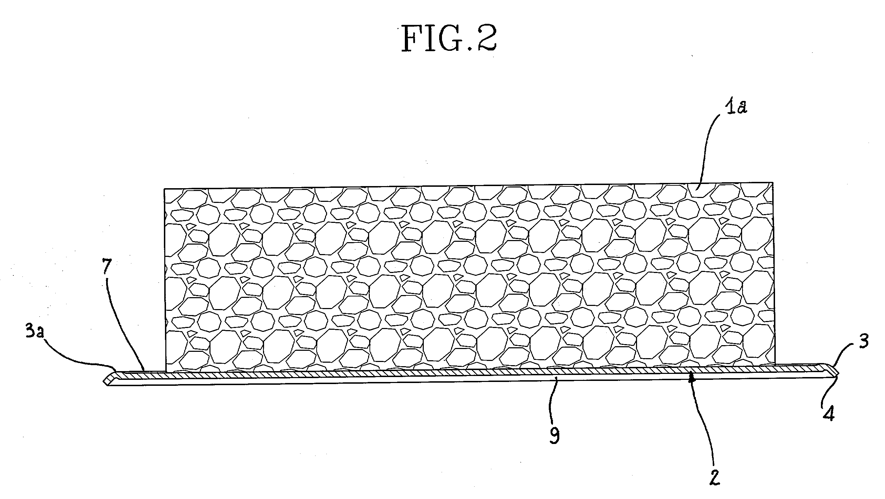

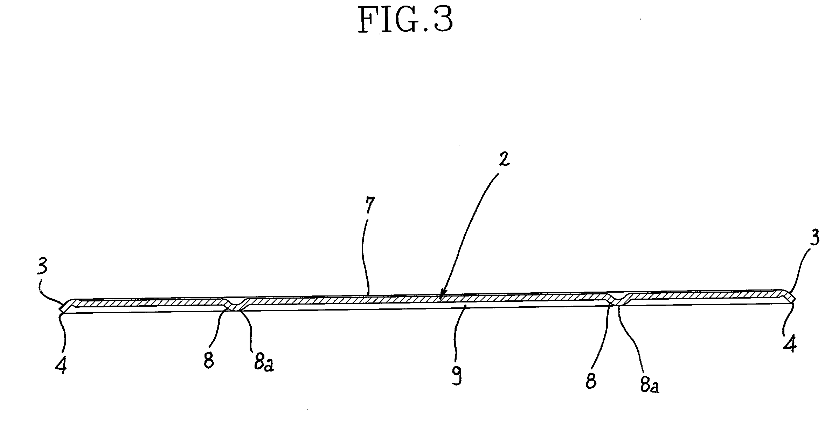

As better illustrated in Figs. 2 and 3, the outer wall 3 is inclined under the horizontal plane in which the main body 2 lies.

It will be recognised, as better specified in the following, that the outer wall 3 can be inclined downwards according to any angle. By way of example, in the accompanying figures a wall inclined through an angle of about 45° under said horizontal plane is shown. Preferably, the outer wall 3 has an inclination α with respect to the horizontal plane that is included between 10° and 120°. More preferably, the outer wall 3 has an inclination α included between 30° and 90°.

In addition, the outer wall 3 has a connecting portion 3a opposite to said end rim 4 and associated with the main body 2. This connecting portion has a rounded extension and does not extend (except in an imperceptible manner as shown in the figure) above said horizontal plane. In other words, the connecting portion 3a remains in the horizontal plane and under it. In addition, no further deformation in the material is defined between the main body 2 and this connecting portion 3a.

Under this situation, the end rim 4 is disposed under the horizontal plane and is substantially turned downwardly.

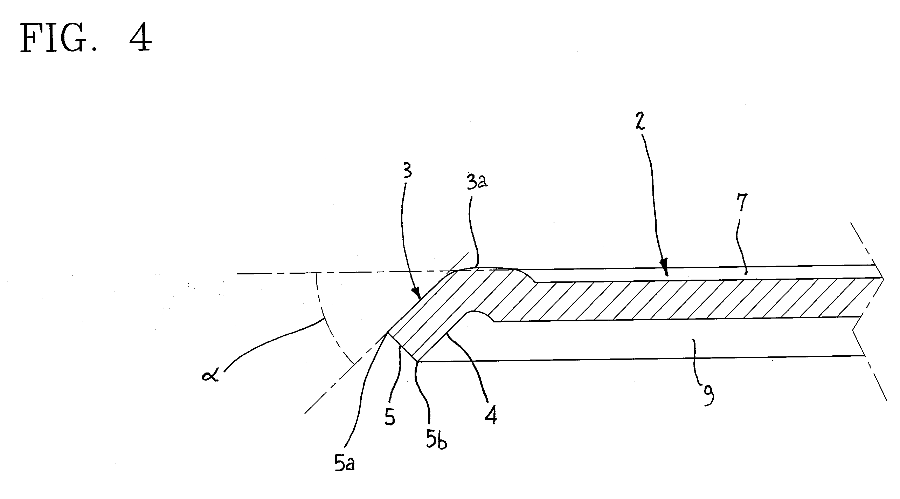

In detail, referring to Fig. 4, the end rim 4 has a side surface 5 substantially facing downwardly and corresponding to the thickness of support 1. The side surface 5 peripherally extending along the whole end rim 4, is defined between an upper edge 5a and a lower edge 5b of the end rim 5.

In this manner, in the instance herein shown in which the outer wall 3 is inclined downwardly substantially at 45°, the lower edge 5b constitutes a rest element for support 1 under use conditions. In other words, under this situation the side surface 5 has a planar extension transverse to the horizontal plane in which the main body 2 lies and the lower edge 5b is designed to rest on a surface so as to keep the main body 2 in a raised position.

Should the outer wall 3 be inclined downwardly at 90° with respect to the horizontal plane (not shown in the drawings), the side surface 5 would lie in a respective plane parallel to said horizontal plane to fully define a rest element for support 1.

Advantageously, support 1 further has a coating film 6 associated with an upper surface 7 of support 1 defined by the main body 2 and the outer wall 3 designed to support the cake.

Advantageously, the coating film 6 is made of a plastic material for food use, preferably polyethylene.

Furthermore, the coating film 6 (or a thin sheet placed under it) can be of any colour and may have any drawing or graphic symbol adapted to give the support 1 an excellent visual effect. Preferably, the coating film 6 (or a thin sheet placed under it) is a reflecting or metallized surface. In accordance with an embodiment shown in Fig. 3, the support 1 further comprises at least one projection 8 defined in the main body 2 and extending under said horizontal plane in which the main body 2 lies.

In more detail, a plurality of projections 8 are present that extend from a lower surface 9 of support 2 opposite to said upper surface 7.

Each projection 8 has an end 8a designed to constitute a further rest element for support 1, in cooperation with the lower edge 5b or the side surface 5.

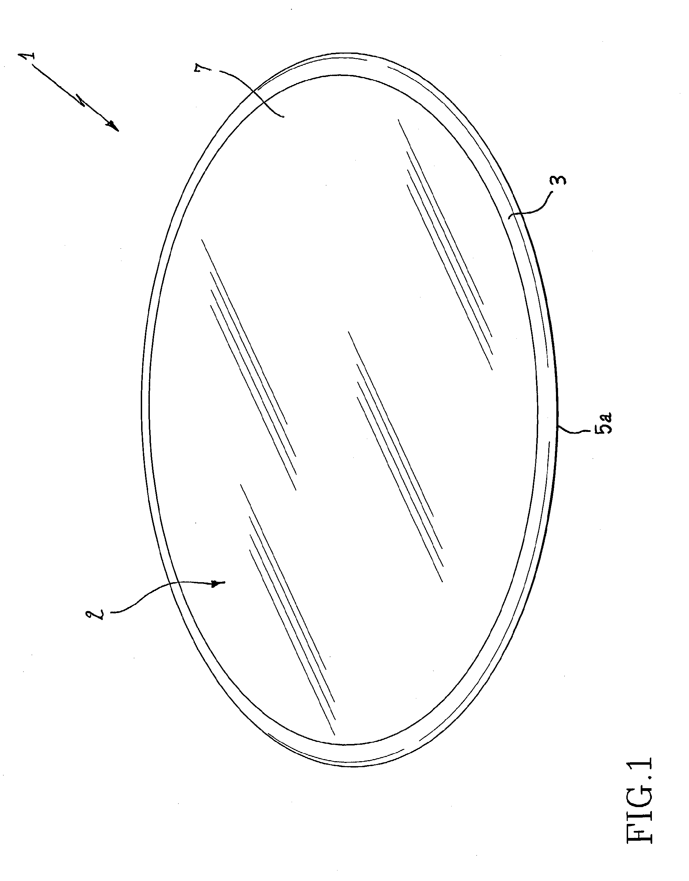

Advantageously, as shown just as an indication in Fig. 1, the support 1 has a vertical bulkiness defined by the outer wall 3 included between 1/50 and 1/70 of the horizontal bulkiness defined by the diameter of the main body 2. In other words, the support 1 is greatly larger than its vertical extension under use conditions.

The present invention also relates to a method of manufacturing the support 1 for cakes and/or sweets; said support 1 is manufactured starting from a sheet material, substantially a paper material, extending along said horizontal plane. The sheet is cut out or punched along its perimeter to define the end rim 3 which, as above specified, has a substantially circular extension and sizes corresponding to the cake to be carried.

Simultaneously with the cutting step, a perimetral portion is deformed to define the main body 2 and the outer wall 3. In detail, the outer wall 3 is inclined under the horizontal plane to dispose the end rim 4 downwardly as above described.

Advantageously the deforming step and the step of inclining the outer wall 3 is obtained by pressure bending.

In addition, it is to be noted that the paper material has the coating film 6 already disposed on the upper surface 7 defined by the main body 2 and the outer wall 3.

This coating film is applied following methods well known in the particular technical field. Preferably the step of applying the coating film 6 takes place before the cutting step. In this way, the coating film 6 extends along the whole upper edge 5a and perfectly covers the whole upper surface 7 defined by the main body 2 and the outer wall 3.

Also obtained on the main body 2 are the projections 8 that extend under the horizontal plane. (They can be obtained simultaneously with the other bending steps, for example). These projections are made through punching of the main body 2 and can be disposed at will on the main body 2.

In this manner the cake 1a can be carried by the above described support 1 (see Fig. 2) for transport or package of the cake itself. In particular, the cake 1a is laid on the upper surface of support 1. at the main body 2.

Advantageously, support 1 is also used for flaming the cake 1a and in particular for carrying it during passage through a blazing flame.

The invention achieves important advantages.

First of all it will be recognised that due to the particular positioning of the end rim 4, and in particular the side surface 5, the support is fully protected from the flame action during the flaming operations. In fact, the portion of side surface 5 that is not covered with the coating film 6 and therefore has cellulose fibres in sight, is always disposed under the horizontal plane and is turned downwardly. Therefore, the flame acting on the surface of the cake 1a does not impinge on this side surface 5 but acts on the upper surface 7 of the outer wall 3.

In addition, should the high flame heat cause burning of surface 5, the same is in any case turned downwardly and therefore concealed to the sight. Thus even if surface 5 is burnt, this burning will not make the product aspect aesthetically worse.

A further advantage is represented by the particularly agreeable aesthetic aspect of the support itself increasing the value of the whole cake package. This advantage is exactly due to the outer wall 3 that is inclined downwardly and keeps in sight and shows the coating film 6 that, as above described, can be coloured, of the reflecting type, or have any graphic ornament.

In addition, another advantage resides in that the main body 2 of support 1, under use conditions is always at a raised position with respect to a possible rest base. In fact, as said, the lower edge 5b or the side surface 5 represent a rest element for the whole support. In addition, with reference to the embodiment in Fig. 3, projections 8 too help in defining a rest element for the whole support 1.

Advantageously, the cake 1a that as shown in Fig. 2 is carried by the main body 2, keeps raised from a base on which support 1 rests, such as the surface of a table. Therefore, possible impurities or wet regions present on the table do not come into contact with the lower surface 9 thereby protecting the main body 2 from a possible damage and maintaining it hygienically isolated.

It will be finally appreciated that the whole support 1 is very cheap. This feature is due to the nature of the material used for manufacture of same (paper material) and to the few operations required for making the piece that consequently has reduced production costs.

## Claims

1. A support for cakes and/or sweets, comprising: a flat main body (2) substantially made of paper material and extending in a respective horizontal plane, and an outer wall (3) directly emerging from the main body (2) and extending along the whole perimetral extension of the main body (2) itself, said outer wall (3) having an end rim (4); **characterised in that** said outer wall (3) is inclined under said horizontal plane, said end rim (4) being disposed under the horizontal plane and being substantially turned downwardly.

2. A support as claimed in claim 1, **characterised in that** said end rim (4) has a side surface (5) substantially facing downwardly; said side surface (5) being defined between an upper edge (5a) and a lower edge (5b) of said end rim (4).

3. A support as claimed in claim 2, **characterised in that** said lower edge (5b) is designed to constitute a rest element for the support (1) under use conditions, said side surface (5) being transverse to said horizontal plane.

4. A support as claimed in claim 2, **characterised in that** said side surface (25) is parallel to said horizontal plane so as to internally define a rest element for the support (1).

5. A support as claimed in claim 1, **characterised in that** said outer wall (3) has a circular extension.

6. A support as claimed in anyone of the preceding claims, **characterised in that** it further comprises an upper surface (7) defined by the main body (2) and the outer wall (3), to carry a cake and/or a sweet (1a), said outer wall (3) and main body (2) being of one piece construction.

7. A support as claimed in the preceding claim, **characterised in that** it further comprises a coating film (6) associated with said upper surface (7), said coating film (6) being preferably made of plastic material for food use.

8. A support as claimed in anyone of claims 6 and 7, **characterised in that** it comprises at least one rest projection (8) defined in said main body (2) and extending away from a lower surface (9) opposite to said upper surface (7).

9. A support as claimed in anyone of the preceding claims, **characterised in that** the vertical bulkiness defined by said outer wall (3) is included between 1/50 and 1/70 of the horizontal bulkiness defined by the main body (2).

10. A method of manufacturing a support for cakes and/or sweets, comprising the steps of:
- arranging a sheet paper material extending along a respective horizontal plane; and
- peripherally cutting said sheet material to define an end rim (4) having a substantially circular extension;
**characterised in that** it further comprises the step of deforming a perimetral portion so as to define a main body (2) and an outer wall (3); said deforming step further comprising the sub-step of inclining the outer wall (3) under said horizontal plane so as to dispose the end rim (4) downwardly.

11. A method as claimed in claim 10, **characterised in that** said step of peripherally cutting the sheet material and said deforming step are made simultaneously.

12. A method as claimed in anyone of claims 10 or 11, **characterised in that** it further comprises the step of obtaining at least one rest projection (8) on the main body (2), which projection extends under said horizontal plane.

13. A method as claimed in claim 12, **characterised in that** said rest projection (8) is obtained by punching.

14. Use of a support for carrying cakes and/or sweets, said support comprising: a flat main body (2) substantially made of paper material and extending in a respective horizontal plane; and an outer wall (2) directly emerging from the main body and extending along the whole perimetral extension of the main body (2), said outer wall (3) having an end rim (4);
**characterised in that** said outer wall (3) is inclined under said horizontal plane, said end rim (4) being disposed under the horizontal plane and being substantially turned downwardly.

15. Use of a support for flaming cakes and/or suits, said support comprising: a flat main body (2) substantially made of paper material and extending in a respective horizontal plane; and an outer wall (3) directly emerging from the main body (2) and extending along the whole perimetral extension of the main body (2), said outer wall (3) having an end rim (4);
**characterised in that** said outer wall (3) is inclined under said horizontal plane, said end rim (4) being disposed under the horizontal plane and being substantially turned downwardly.
